# EUROPEAN PATENT SPECIFICATION

(11) **EP 2 442 504 B1**
(45) Date of publication and mention of the grant of the patent: **10.07.2013**
(21) Application number: 10187602.7
(22) Date of filing: 14.10.2010
(51) Int. Cl.: H04L 12/58, H04L 12/28

(54) **Method and devices for device control via instant messaging**
Verfahren und Vorrichtungen zur Gerätesteuerung mittels eines sofortigen Nachrichtendiensts
Procédé et dispositifs pour le contrôle de dispositif par messagerie instantanée

(43) Date of publication of application: 18.04.2012
(73) Proprietor: Research In Motion Limited, Waterloo, ON N2L 3W8 (CA)
(72) Inventor: Yoon, Iljee, Mississauga Ontario L4W 0B5 (CA); Son, Giyeong, Waterloo Ontario N2L 5Z5 (CA); Manolescu, Andreea, Mississauga Ontario L4W 0B5 (CA)
(74) Representative: Roberts, Gwilym Vaughan

(56) References cited:
- EP-A1- 1 696 620
- WO-A1-03/036498
- WO-A1-2008/070846
- FR-A1- 2 835 673

## Description

### Technical Field

The present disclosure relates to the field of communications, and, more particularly, to messaging systems and related methods.

### Background

Home control and monitoring systems are becoming increasingly popular. More particularly, a home control and monitoring system may include a camera, for example, and may communicate over a network, for example, the Internet. The camera may be accessed over the network via the camera's network address and port number, for example. A home control and monitoring system may also include controllable lighting, for example.

A home control and monitoring system may be accessible or controlled over the network via a mobile wireless communications device, for example. More particularly, a mobile application loaded on the mobile wireless communications device may be associated with a device to be monitored or controlled. For example, a lighting control application may be associated with controllable lighting, while a camera monitoring application may be associated with a camera. Additionally, each mobile application may also be for a specific type or brand of mobile wireless communications device.

In other words, a single mobile application may only operate with a single type or brand of mobile wireless communications device and control only a single device. Thus, controlling multiple devices on multiple types or brands of mobile wireless communications devices may involve using a more than one application, and more particularly, more than one application on a single mobile wireless communications device.

WO 2008/070846 is directed to an instant messaging client may operate on a host device and enable various forms of control of the host device via instant messaging commands. The instant messaging client may connect to an instant messaging service using a user name and having a list of authorized users. The client may be able to sense that a user is on line and initiate a message session with the user. The user may also be able to initiate a session with the host device through the instant messaging client and perform a variety of functions through the instant messaging session.

FR 2835673 is directed to automation equipment comprising a processing unit (11), application memory (13) and a network interface (16). The automation equipment executes client instant messaging software, which is able to access application memory and allows the automation equipment to connect to an instant messaging server (30) via the communications network (50). Instant messages are exchanged with a third party (40, 41) to supply monitoring, visualization, or command functions relative to the automation equipment.

WO 03/036498 is directed to an intelligent device (108, 114) and a control station (102, 112) including respective IM clients are coupled (502) to a communication network (100). A user adds (508) the intelligent device to an IM "buddy" list (420) in the control station, and thereafter controls (510) the intelligent device from the control station by sending the intelligent device an instant message including a command from the control station.

EP 1696620 is directed to methods for controlling and/or monitoring at least one device using instant messages. In controlling at least one device, an instant messaging user may provide an instant message, which may include an operation to be performed. The instant messaging user may be informed of the performed operation via an instant message. In monitoring at least one device, a user may be informed of a status of the at least one device via an instant message.

Aspects of the invention are defined in the accompanying independent claims.

### Brief Description of the Drawings

FIG. 1 is a schematic diagram of a communications system in accordance with an exemplary embodiment.

FIG. 2 is a plan view of the control device of FIG. 1.

FIG. 3 is a schematic block diagram of the control gateway and a portion of the control device of FIG. 1.

FIG. 4 is a schematic block diagram of the control gateway and a portion of the control device according to another exemplary embodiment.

FIG. 5 is a flow diagram of a method of communication in accordance with an exemplary embodiment.

FIG. 6 is a flow diagram of a method of communication in accordance with another exemplary embodiment.

FIG. 7 is a schematic block diagram illustrating additional components that may be included in the control device of FIG. 1

### Detailed Description of the Preferred Embodiments

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout, and prime notation is used to indicate similar elements in alternative embodiments.

According to an exemplary aspect, a communications system may include a control device having an instant message (IM) device contact associated therewith. The communications system may also include a control gateway having an IM gateway contact associated therewith and may be configured to communicate with a controllable device over a network. The control gateway may be configured to validate the IM device contact. The control device may be configured to communicate with the controllable device through the control gateway after validation and based upon the IM device contact and the IM gateway contact. Accordingly, the communications system may provide increased interoperability among controllable devices and increased security between a control device and a control gateway.

The control gateway may include a database of a plurality of validated IM device contacts. The control gateway may be configured to validate the IM device contact based upon one of the plurality of validated IM device contacts, for example. The control gateway may be configured to send a communications request to the control device based upon the IM device contact being added to the database of the plurality of validated IM device contacts.

The control gateway may be configured to send a notification to the control device that the IM device contact has been validated, for example. The control device may be configured to send a validation request to the control gateway.

The control device may be a mobile wireless control device, for example. The mobile wireless control device may include a wireless transceiver and a controller cooperating therewith to perform at least one wireless communications function. The communications system may further include an IM server configured to provide IM communications between the control gateway and the control device.

A method aspect is directed to a communications method. The method may include using a control gateway having an IM gateway contact associated therewith to communicate with a controllable device over a network, and validate an IM device contact associated with a control device, for example. The method may further include using the control device to communicate with the controllable device through the control gateway after validation and based upon the IM device contact and the IM gateway contact.

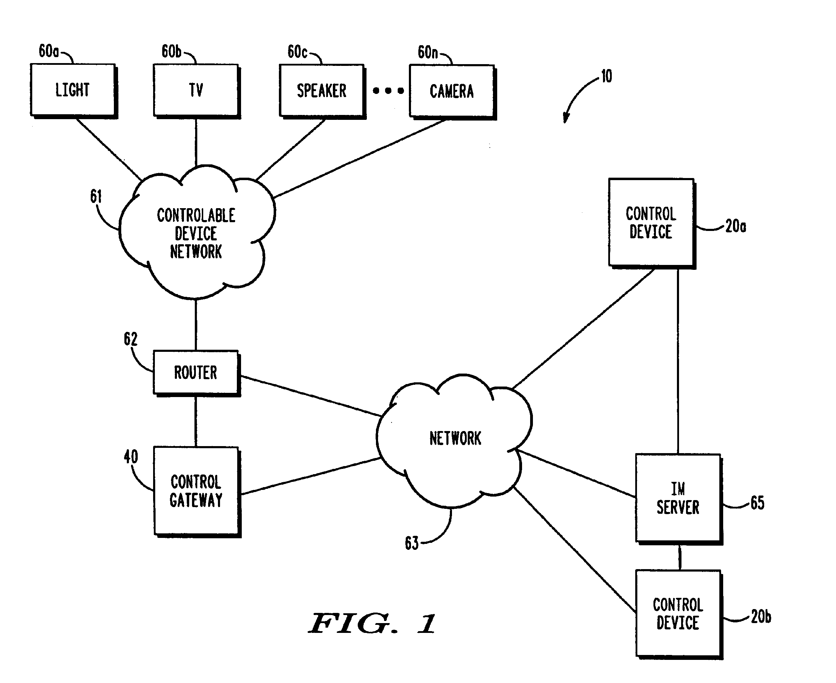

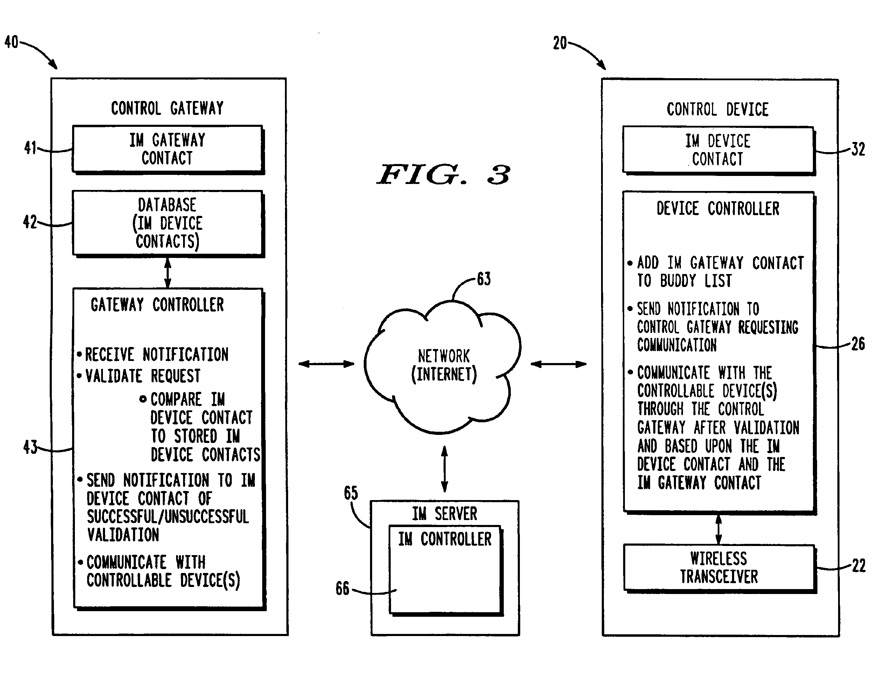

Referring initially to FIGS. 1-3, a communications system 10 illustratively includes control devices **20a, 20b.** Illustratively, each control device **20** is a mobile wireless communications device and includes a housing **21.** The control device **20** includes a display **23** carried by the housing **21** and an audio transducer **25** also carried by the housing. The audio transducer **25** may be a microphone, for example. The audio transducer **25** may also be a speaker. In some example embodiments, there may be more than one audio transducer **25,** for example, a microphone and speaker may be used and carried by the housing **21**.

The control device **20** includes one or more input devices **31**. The input devices **31** illustratively include push buttons for cooperating with a controller **26**. In some example embodiments, the input device **31** may be an alphanumeric keypad or other input device for cooperating with the controller **26**, for example. Still further, an input device **31** (e.g. a button, a key, a trackball, an optical trackpad, a touchscreen, a thumbwheel, etc.) may be coupled to the display **23** to accept a touching input therefrom and cooperate with the controller **26.**

The controller **26** is also carried by the housing **21** and cooperates with a wireless transceiver **22** to perform at least one mobile wireless communications function. For example, the wireless transceiver **22** may be a cellular transceiver or a WiFi transceiver, for example, and may cooperate with the controller **26** to communicate data and/or voice communications. Other types of wireless transceivers and mobile wireless communications functions will be appreciated by those skilled in the art.

The control device **20** has an instant message (IM) device contact **32** associated therewith. The IM device contact **32** may be provided by an IM device client, for example, Blackberry Messenger™, MSN Messenger™, and AOL Instant Messenger™. The IM device client may also cooperate with the controller **26** to provide an application programming interface (API) for receiving and sending data and commands to controllable devices **60a-60n.** The IM device client may also provide an API for creating and accessing an IM session, for example, with another IM device contact.

The communications system **10** also includes a control gateway **40** having an IM gateway contact **41** associated therewith. The IM gateway contact **41** may be provided by an IM gateway client. The IM gateway client cooperates with a gateway controller **43** to provide an API that may set the control type and properties of the IM gateway contact **41.** The control type and properties of the IM gateway contact **41** may include supported commands, parameters, and event subscription rules, for example, as will be appreciated by those skilled in the art. The control type may distinguish the IM gateway contact **41** from other types of IM contacts. For example, the control gateway **40** may set a particular IM control type that may identify the IM gateway contact as one that operates to control controllable devices.

The control gateway **40,** and more particularly, the gateway controller **43**, is configured to communicate with the controllable device **60a-60n**. The controllable devices **60a-60n** may each be a controllable power switch, light, speaker, door bell, camera, or other controllable device, for example.

The control gateway **40** may communicate with a selected one of the controllable devices **60a-60n** over a controllable device network **61**. The controllable device network **61** may be a wired network. Alternatively, the controllable device network **61** may be a wireless network, or a combination of wired and wireless networks. For example, the controllable device network **61** may be a local area network (LAN) located in a home and may include a one or more of a router **62**, digital subscriber line (DSL) modem (not shown), or other networking device, as will be appreciated by those skilled in the art. The controllable device network **61** may be located in other locations, for example, a building, a dwelling, or other area near the controllable devices **60a-60n.**

The control device **20,** and more particularly, the controller **26,** is configured to communicate with one or more of the controllable devices **60a-60n** through the control gateway **40.** As will be appreciated by those skilled in the art, the control gateway **40** may have its own internet address and may be accessible, or programmed, via a control panel, for example, a web browser. The control gateway **40** includes a database **42** of IM device contacts. The IM device contacts stored in the database **42** may be entered via the control panel, for example. As will be appreciated by those skilled in the art, the IM device contacts stored in the database **42** may be validated or considered "safe" IM contacts. Additionally, controllable device access permissions for each IM device contact stored in the database **42** may be set.

An IM server **65** that may include an IM server controller **66** may host or facilitate IM communications between IM contacts, for example, the IM device contact **32** and the IM gateway contact **41.** The IM server **65** may be coupled to a network **63,** for example, the Internet, and communicate with the control gateway **40** and the control device **20** over the Internet. Of course, the control device **20**, the control gateway **40**, and the IM server **65** may communicate over additional networks, or a combination of networks, for example, a cellular network, an internet protocol (IP) network, an internet service provider (ISP) network, a digital subscriber line (DSL) network, and a packet core network. Moreover, in some embodiments, the IM server functionality may be included in one or both of the control gateway **40** and the control device **20.**

The IM device contact **32** invites communication with the IM gateway contact **41**. The IM device contact **32** may invite communication by adding the IM gateway contact **41** to a list of IM contacts on the control device **20.**
The IM device contact **32** may send a notification, to the control gateway **40,** requesting communication with the IM gateway contact **41**. The request may include the identity of the IM device contact **32.**

The control gateway **40,** via the IM gateway contact **41,** validates the request for communication by comparing the IM device contact **32** to the list of validated IM device contacts stored in the database **42** on the control gateway **40.** Of course, validation may be performed using other identifiers.

As will be appreciated by those skilled in the art, the IM device contacts stored in the database **42** are considered safe or validated contacts, and by allowing communication with the contacts in the database, while excluding other IM device contacts, communications with the controllable devices **60a-60n** may be limited to validated contacts. Thus, security may be increased.

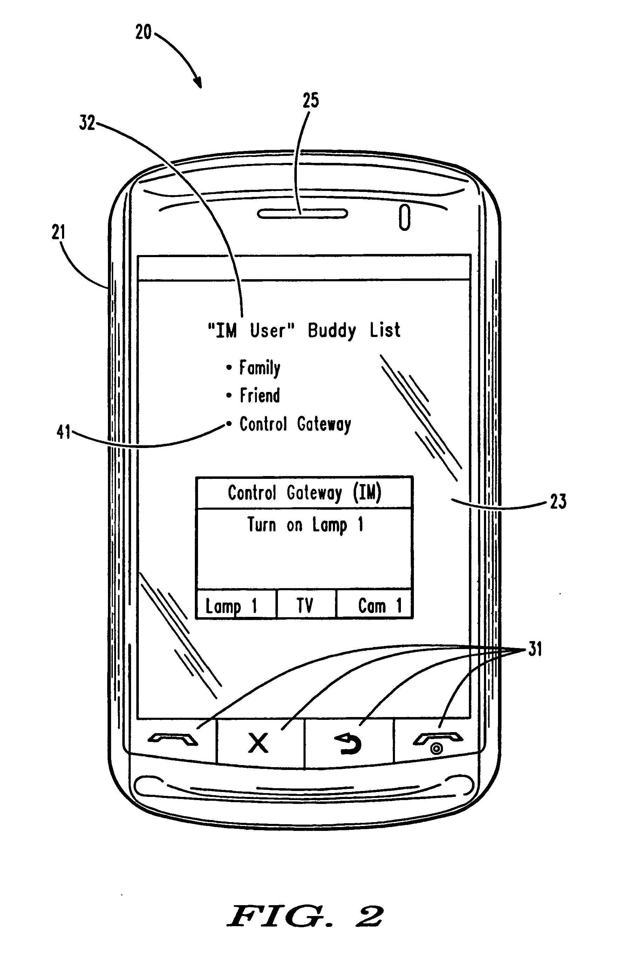

Based upon a successful validation, the control gateway **40,** via the IM gateway contact **41**, may send a notification message to the IM device contact **32** that the IM device contact has been validated. The notification message may include one or both of audio and video. For example, if the IM device contact **32** has been validated, the IM device contact may be notified by displaying the IM gateway contact **41** in the IM device contact's contact list or "buddy list" (FIG. 2). The IM gateway contact **41** is user selectable from among other contacts in the contact list. By selecting the IM gateway contact **41**, the IM gateway contact's properties and available operations may be displayed. For example, operations to turn on and off a light may be displayed if the selected controllable device **60a-60n** is a controllable light.

In contrast, if the IM device contact **32** is not validated, the IM gateway contact **41** is not added to the IM device contact's contact list. Moreover, the IM gateway **40** may send a notification, for example, a message via the IM gateway contact **41**, that the IM device contact **32** cannot be validated, and communications therewith cannot be established.

Depending on the configuration, a single IM conversation or an IM conference may be initiated. An IM conversation or dialogue is opened by the IM device contact **32**. The IM device contact **32** may view the notification message and send a command to the controllable devices **60a-60n** via the IM gateway contact **41**. For example, the commands may include view camera, turn on/off power, and start video/audio recording, for example. Other commands may be sent for controlling other ones of the controllable devices **60a-60n**, as will be appreciated by those skilled in the art. The control gateway **40** returns execution results of the commands via the conversation between the IM gateway contact **41** and the IM device contact **32**.

Available controllable devices **60a-60n** appear in the dialogue or IM conversation, for example. Newly added controllable devices **60a-60n** may appear as they are added and disappear as they are removed. The control gateway **40** returns execution results of the commands via the conversation between the IM gateway contact **41** and the IM device contact **32.**

As will be appreciated by those skilled in the art, by using an IM infrastructure or protocol, the communications system **10** addresses interoperability issues between different control devices **20**, client applications, and controllable devices **60a-60n.**
Moreover, by using an IM protocol, the communications system **10** may provide standardization of controllable device protocols and thus, may reduce the number of applications for communication and increase security.

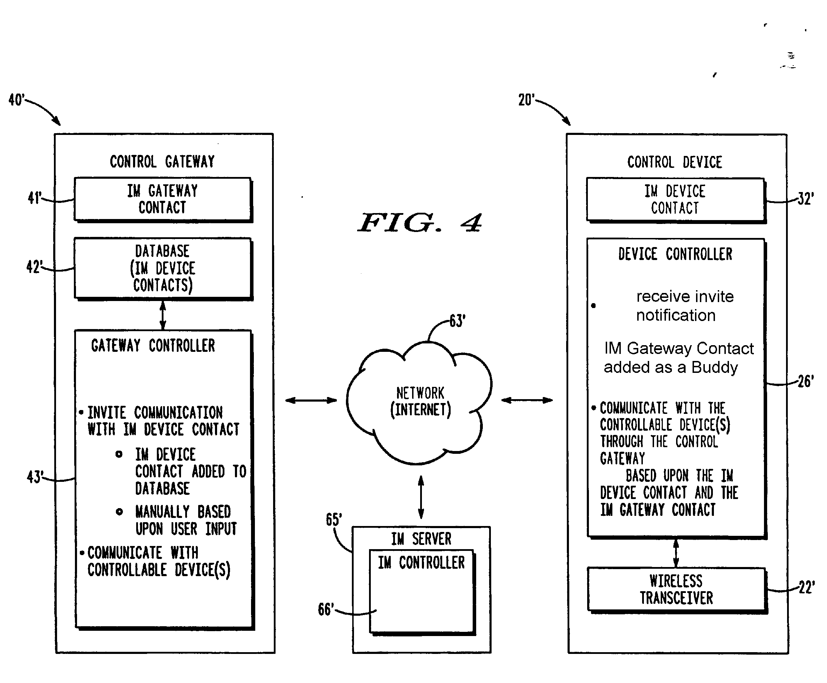

Referring now to FIG. 4, the IM gateway contact **41'** invites communication with an IM device contact **32',** for example, a family member or other trusted IM device contact. The control gateway **40'** may send a notification to the control device **20'** requesting communication with the IM gateway contact **41'** by being added to the list of contacts for communicating via the IM device contact **32'.** The request may include the identity of the IM gateway contact **41'** and its properties, for example, that it is a control gateway.

The control gateway **40'** may send the invite notification based upon the IM device contact **32'** being added to the database **42'.** Alternatively, or additionally, the control gateway **40'** may send the invite notification manually based upon user input, for example.

The invited IM device contact **32'** may accept the invitation. Upon acceptance, the IM gateway contact **41'** is added as a "buddy" or contact in the contact list for the IM device contact **32'.** The IM gateway contact **41'** is user selectable from among other contacts in the contact list. By selecting the IM gateway contact **41',** the IM gateway contact's properties and available operations may be displayed. For example, operations to turn on and off a light may be displayed if the controllable device **60a'-60n'** is a controllable light.

During communications, the controllable devices **60a'-60n',** send a signal to the control gateway **40'.** The control gateway **40'** initiates communications with the IM device contact **32'** by sending a notification message.
The notification message may include one or both of audio and video. Depending on the configuration a single IM conversation or an IM conference may be initiated, and the IM device contact **32'** may also initiate communications.

An IM conversation or dialogue is opened by the IM device contact **32*'*.** The IM device contact **32'** may view the notification and send a command to the controllable devices **60a'-60n'** via the IM gateway contact **41'.** For example, the commands may include view camera, turn on/off power, and start video/audio recording, for example. Other commands may be sent for controlling other controllable devices, as will be appreciated by those skilled in the art. The control gateway **40'** returns execution results of the commands via the conversation between the IM gateway contact **41'** and the IM device contact **32'.**

As will be appreciated by those skilled in the art, the communications system **10** advantageously increases interoperability between different products, for example, between the controllable devices **60a-60n** and the control devices **20** of different brands. Moreover, security and reliability of communications with controllable devices **60a-60n** may be increased while reducing the amount of infrastructure for communicating with the controllable devices. For example, by using an IM contact for contact management functionality, user authorization, and access control, the communications system **10** advantageously reduces configuration complexity allowing more efficient communications.

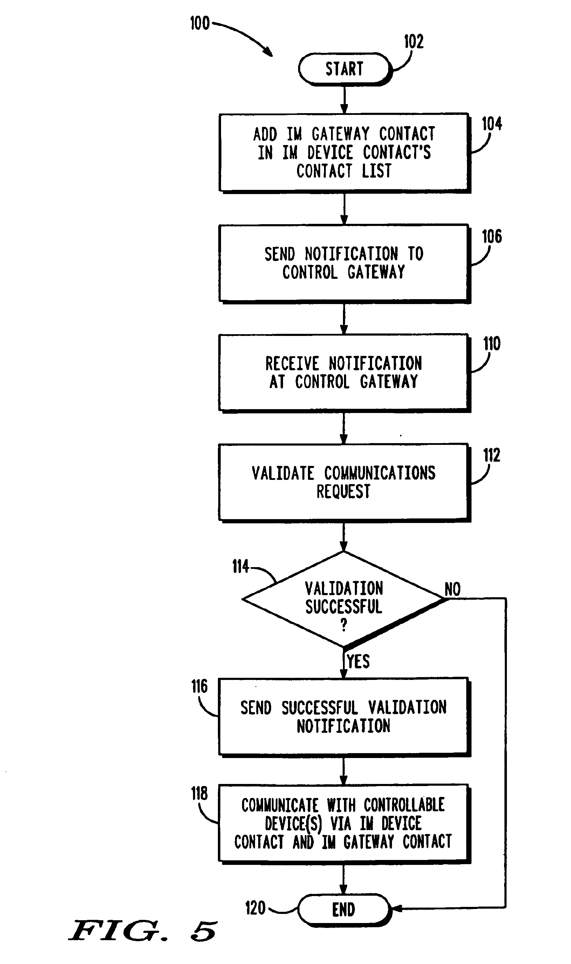

Referring now to the flowchart **100** in FIG. 5, a method of communication illustratively includes, beginning at Block **102**, at a control device **20,** adding an IM gateway contact **41** associated with a control gateway **40** to an IM device contact's contact list (Block **104**). The control device **20** may send a notification to the control gateway **40** via the IM gateway contact **41** requesting communication therewith (Block **106**). The control gateway **40** receives the notification (Block **110**) and validates the communication request (Block **112**). If validation is successful (Block **114**), the control gateway **40** may send a notification to the IM device contact **32** indicating a successful validation (Block **116**). Thereafter, the control device **20** communicates with the controllable devices **60a-60n** through the control gateway **40** based upon the IM device contact **32** and the IM gateway contact **41** (Block **118**). Alternatively, if the validation is unsuccessful, communications are not established. The method ends at Block **120**.

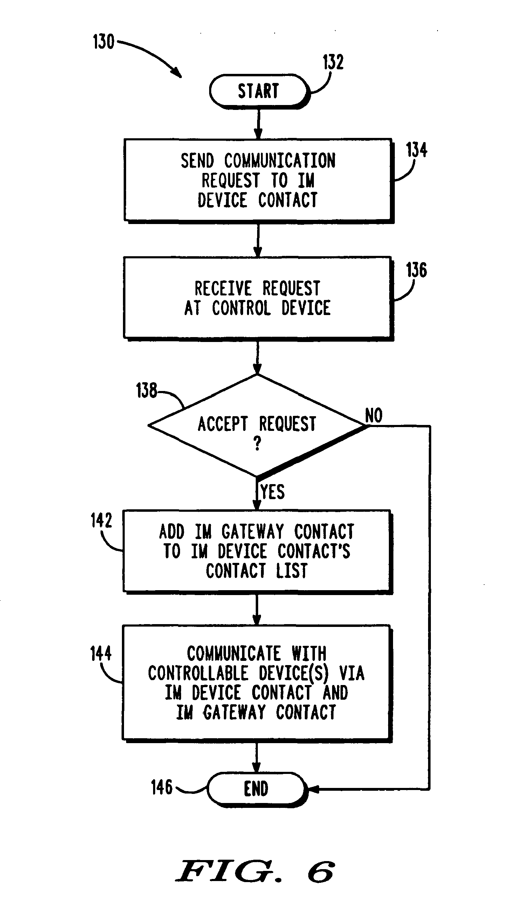

Referring now to the flowchart **130** in FIG. 6, a method of communication illustratively includes, beginning at Block **132**, at a gateway controller **40**, having an IM gateway contact **41** associated therewith, sending an invitation message requesting communication with an IM device contact **32** associated with a control device **20** (Block **134**). The invitation message may be sent based upon one or both of the IM device contact **32** being added to a listing of IM device contacts in a database **42** and manually based upon input from a user. At Block **136,** the control device **20**, via the IM device contact **32,** receives the invitation message, and if the invitation is accepted (Block **138**), the IM gateway contact **41** is added to the IM device contact's contact list (Block **142**). Thereafter, the control device **20** communicates with the controllable devices **60a-60n** through the control gateway based upon the IM device contact **32** and the IM gateway contact (Block **144**). Alternatively, if the validation is unsuccessful, communications are not established. The method ends at Block **146**.

Additionally, the functionality of the communications system, including the functionality of the control device, the control gateway, for example, may be implemented using a combination of hardware (e.g., microprocessor, controller, etc.) and non-transitory computer readable medium components including computer-readable instructions for causing the various operations discussed herein to be performed.

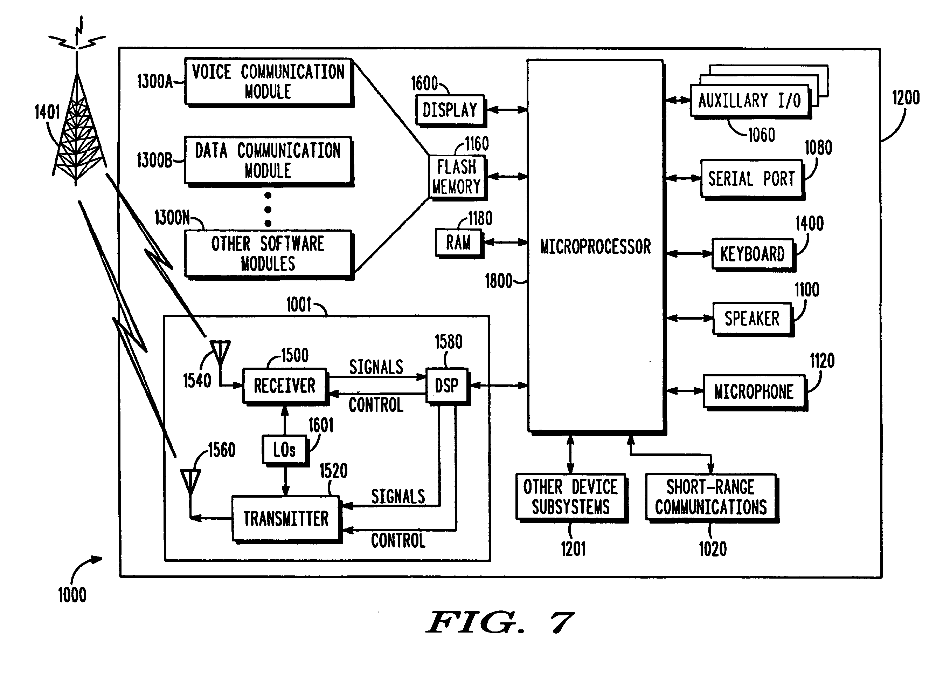

Exemplary components that may be used in various embodiments of the above-described control device are now described with reference to an exemplary mobile wireless communications device **1000** shown in FIG. 7. The device **1000** illustratively includes a housing **1200**, a keypad **1400** and an output device **1600**. The output device shown is a display **1600**, which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad 1400 may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800**, in addition to its operating system functions, enables execution of software applications or modules **1300A-1300N** on the device **1000**, such as software modules for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500**, a transmitter **1520,** and one or more antennas **1540** and **1560**. In addition, the communications subsystem **1001** also includes a processing module, such as a digital signal processor (DSP) **1580**, and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060.** A device user may also compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem 1001.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other example embodiments of the present disclose will come to the mind of one skilled in the art having the benefit of the teachings presented in the foregoing descriptions and the associated drawings. Therefore, it is understood that the present disclosure is not to be limited to the specific example embodiments disclosed. The scope of the invention is defined by the claims.

## Claims

1. A communications system (10) comprising:
a control device (20) having an instant message (IM) device contact (32) associated therewith; and
a control gateway (40) having an IM gateway contact (41) associated therewith and configured to communicate with a controllable device (60) over a network (61), and validate the IM device contact, said control gateway comprising a database (42) of a plurality of already validated IM device contacts;
said control device configured to communicate with the controllable device through said control gateway after validation and based upon the IM device contact and the IM gateway contact;
said control gateway configured to send a communications request to said control device based upon the IM device contact being added to the database of the plurality of already validated IM device contacts.

2. The communications system according to Claim 1, wherein said control gateway is configured to validate the IM device contact based upon one of the plurality of already validated IM device contacts.

3. The communications system according to Claim 1, wherein said control gateway is configured to send a notification to said control device that the IM device contact has been validated.

4. The communications system according to Claim 1, wherein said control device is configured to send a validation request to said control gateway.

5. The communications system according to Claim 1, wherein said control device comprises a mobile wireless control device.

6. The communications system according to Claim 1, further comprising an IM server (65) configured to provide IM communications between said control gateway and said control device.

7. A control device (20) having an instant message (IM) device contact (32) associated therewith and comprising:
a control device controller (26) configured to communicate with a control gateway (40) having an instant message (IM) gateway contact (41) associated therewith and configured to communicate with a controllable device (60) over a network (61), and validate the IM device contact, the control gateway comprising a database (42) of a plurality of already validated IM device contacts;
said control device controller configured to communicate with the controllable device through the control gateway after validation and based upon the IM device contact and the IM gateway contact;
said control device configured to receive a communications request from said control gateway based upon the IM device contact being added to the database of the plurality of already validated IM device contacts.

8. The control device according to Claim 7, wherein said control device controller is configured to receive a notification from the control gateway that the IM device contact has been validated.

9. The control device according to Claim 7, wherein said control device controller is configured to send a validation request to the control gateway.

10. The control device according to Claim 7, further comprising a wireless transceiver cooperating with said control device controller to perform at least one wireless communications function.

11. The control device according to Claim 7, wherein said control device controller is configured to communicate with an IM server configured to provide IM communications.

12. A communications method comprising:
using a control device (20) to communicate with a controllable device (60) through a control gateway (40) over a network (61), the control gateway having an IM gateway contact (41) associated therewith and comprising a database (42) of a plurality of already validated IM device contacts;
the communication being based upon an IM device contact (32) associated with the control device and the IM gateway contact and after validation from the control gateway;
the communication also being based upon the control gateway sending a communications request to the control device based upon the IM device contact being added to the database of the plurality of already validated IM device contacts.

13. The method according to Claim 12, further comprising using the control device to send a validation request to the control gateway.

## Patentansprüche

1. Ein Kommunikationssystem (10), das aufweist:
eine Steuervorrichtung (20) mit einem damit assoziierten Sofortnachricht(IM - instant message)-Vorrichtungs-Kontakt (32); und
ein Steuerungs-Gateway (40) mit einem damit assoziierten IM-Gateway-Kontakt (41) und konfiguriert zum Kommunizieren mit einer steuerbaren Vorrichtung (60) über ein Netzwerk (61) und zum Validieren des IM-Vorrichtungs-Kontakts, wobei das Steuerungs-Gateway eine Datenbank (42) mit einer Vielzahl von bereits validierten IM-Vorrichtungs-Kontakten aufweist;
wobei die Steuervorrichtung konfiguriert ist zum Kommunizieren mit der steuerbaren Vorrichtung über das Steuerungs-Gateway nach der Validierung und basierend auf dem IM-Vorrichtungs-Kontakt und dem IM-Gateway-Kontakt;
wobei das Steuerungs-Gateway konfiguriert ist zum Senden einer Kommunikationsanforderung an die Steuervorrichtung basierend auf einem Hinzufügen des IM-Vorrichtungs-Kontakts zu der Datenbank der Vielzahl von bereits validierten IM-Vorrichtungs-Kontakten.

2. Das Kommunikationssystem gemäß Anspruch 1, wobei das Steuerungs-Gateway konfiguriert ist zum Validieren des IM-Vorrichtungs-Kontakts basierend auf einem der Vielzahl von bereits validierten IM-Vorrichtungs-Kontakten.

3. Das Kommunikationssystem gemäß Anspruch 1, wobei das Steuerungs-Gateway konfiguriert ist zum Senden einer Benachrichtigung an die Steuervorrichtung, dass der IM-Vorrichtungs-Kontakt validiert wurde.

4. Das Kommunikationssystem gemäß Anspruch 1, wobei die Steuervorrichtung konfiguriert ist zum Senden einer Validierungsanforderung an das Steuerungs-Gateway.

5. Das Kommunikationssystem gemäß Anspruch 1, wobei die Steuervorrichtung eine mobile drahtlose Steuervorrichtung aufweist.

6. Das Kommunikationssystem gemäß Anspruch 1, das weiter einen IM-Server (65) aufweist, der konfiguriert ist zum Vorsehen von IM-Kommunikationen zwischen dem Steuerungs-Gateway und der Steuervorrichtung.

7. Eine Steuervorrichtung (20) mit einem damit assoziierten Sofortnachricht(IM - instant message)-Vorrichtungs-Kontakt (32) und aufweisend:
eine Steuervorrichtungs-Kontrolleinrichtung (26), die konfiguriert ist zum Kommunizieren mit einem Steuerungs-Gateway (40), das einen damit assoziierten IM-Gateway-Kontakt (41) hat und konfiguriert ist zum Kommunizieren mit einer steuerbaren Vorrichtung (60) über ein Netzwerk (61) und zum Validieren des IM-Vorrichtungs-Kontakts, wobei das Steuerungs-Gateway eine Datenbank (42) mit einer Vielzahl von bereits validierten IM-Vorrichtungs-Kontakten aufweist;
wobei die Steuervorrichtungs-Kontrolleinrichtung konfiguriert ist zum Kommunizieren mit der steuerbaren Vorrichtung über das Steuerungs-Gateway nach der Validierung und basierend auf dem IM-Vorrichtungs-Kontakt und dem IM-Gateway-Kontakt;
wobei die Steuervorrichtung konfiguriert ist zum Empfangen einer Kommunikationsanforderung von dem Steuerungs-Gateway basierend auf einem Hinzufügen des IM-Vorrichtungs-Kontakts zu der Datenbank der Vielzahl von bereits validierten IM-Vorrichtungs-Kontakten.

8. Die Steuervorrichtung gemäß Anspruch 7, wobei die Steuervorrichtungs-Kontrolleinrichtung konfiguriert ist zum Empfangen einer Benachrichtigung von dem Steuerungs-Gateway, dass der IM-Vorrichtungs-Kontakt validiert wurde.

9. Die Steuervorrichtung gemäß Anspruch 7, wobei die Steuervorrichtungs-Kontrolleinrichtung konfiguriert ist zum Senden einer Validierungsanforderung an das Steuerungs-Gateway.

10. Die Steuervorrichtung gemäß Anspruch 7, die weiter einen drahtlosen Transceiver aufweist, der mit der Steuervorrichtungs-Kontrolleinrichtung zusammenarbeitet, um zumindest eine drahtlose Kommunikationsfunktion durchzuführen.

11. Die Steuervorrichtung gemäß Anspruch 7, wobei die Steuervorrichtungs-Kontrolleinrichtung konfiguriert ist zum Kommunizieren mit einem IM-Server, der konfiguriert ist zum Vorsehen von IM-Kommunikationen.

12. Ein Kommunikationsverfahren, das aufweist:
Verwenden einer Steuervorrichtung (20) zum Kommunizieren mit einer steuerbaren Vorrichtung (60) durch ein Steuerungs-Gateway (40) über ein Netzwerk (61), wobei das Steuerungs-Gateway (40) einen damit assoziierten IM-Gateway-Kontakt (41) hat und eine Datenbank (42) mit einer Vielzahl von bereits validierten IM-Vorrichtungs-Kontakten aufweist;
wobei die Kommunikation auf einem IM-Vorrichtungs-Kontakt (32) basiert, der mit der Steuervorrichtung assoziiert ist, und dem IM-Gateway-Kontakt und nach einer Validierung von dem Steuerungs-Gateway;
wobei die Kommunikation auch basiert auf einem Senden, durch das Steuerungs-Gateway, einer Kommunikationsanforderung an die Steuervorrichtung basierend auf einem Hinzufügen des IM-Vorrichtungs-Kontakts zu der Datenbank der Vielzahl von bereits validierten IM-Vorrichtu ngs-Konta kten.

13. Das Verfahren gemäß Anspruch 12, das weiter aufweist ein Verwenden der Steuervorrichtung, um eine Validierungsanforderung an das Steuerungs-Gateway zu senden.

## Revendications

1. Système de communications (10) comprenant :
un dispositif de contrôle (20) ayant un contact de dispositif de message instantané (IM) (32) qui y est associé ; et
une passerelle de contrôle (40) ayant un contact de passerelle IM (41) qui y est associé et configurée pour communiquer avec un dispositif contrôlable (60) sur un réseau (61), et valider le contact de dispositif IM, ladite passerelle de contrôle comprenant une base de données (42) d'une pluralité de contacts de dispositif IM déjà validés ;
ledit dispositif de contrôle configuré pour communiquer avec le dispositif contrôlable par l'intermédiaire de ladite passerelle de contrôle après la validation et sur la base du contact de dispositif IM et du contact de passerelle IM ;
ladite passerelle de contrôle configurée pour envoyer une demande de communications audit dispositif de contrôle sur la base du contact de dispositif IM qui est ajouté à la base de données de la pluralité de contacts de dispositif IM déjà validés.

2. Système de communications selon la revendication 1, dans lequel ladite passerelle de contrôle est configurée pour valider le contact de dispositif IM sur la base d'un de la pluralité de contacts de dispositif IM déjà validés.

3. Système de communications selon la revendication 1, dans lequel ladite passerelle de contrôle est configurée pour envoyer une notification audit dispositif de contrôle selon laquelle le contact de dispositif IM a été validé.

4. Système de communications selon la revendication 1, dans lequel ledit dispositif de contrôle est configuré pour envoyer une demande de validation à ladite passerelle de contrôle.

5. Système de communications selon la revendication 1, dans lequel ledit dispositif de contrôle comprend un dispositif de contrôle sans fil mobile.

6. Système de communications selon la revendication 1, comprenant en outre un serveur IM (65) configuré pour fournir des communications IM entre ladite passerelle de contrôle et ledit dispositif de contrôle.

7. Dispositif de contrôle (20) ayant un contact de dispositif de message instantané (IM) (32) qui y est associé et comprenant :
un contrôleur de dispositif de contrôle (26) configuré pour communiquer avec une passerelle de contrôle (40) ayant un contact de passerelle de message instantané (IM) (41) qui y est associé et configuré pour communiquer avec un dispositif contrôlable (60) sur un réseau (61), et valider le contact de dispositif IM, la passerelle de contrôle comprenant une base de données (42) d'une pluralité de contacts de dispositif IM déjà validés ;
ledit contrôleur de dispositif de contrôle configuré pour communiquer avec le dispositif contrôlable par l'intermédiaire de la passerelle de contrôle après la validation et sur la base du contact de dispositif IM et du contact de passerelle IM ;
ledit dispositif de contrôle configuré pour recevoir une demande de communications en provenance de ladite passerelle de contrôle sur la base du contact de dispositif IM qui est ajouté à la base de données de la pluralité de contacts de dispositif IM déjà validés.

8. Dispositif de contrôle selon la revendication 7, dans lequel ledit contrôleur de dispositif de contrôle est configuré pour recevoir une notification de la passerelle de contrôle selon laquelle le contact de dispositif IM a été validé.

9. Dispositif de contrôle selon la revendication 7, dans lequel ledit contrôleur de dispositif de contrôle est configuré pour envoyer une demande de validation à la passerelle de contrôle.

10. Dispositif de contrôle selon la revendication 7, comprenant en outre un émetteur-récepteur sans fil coopérant avec ledit contrôleur de dispositif de contrôle pour effectuer au moins une fonction de communications sans fil.

11. Dispositif de contrôle selon la revendication 7, dans lequel ledit contrôleur de dispositif de contrôle est configuré pour communiquer avec un serveur IM configuré pour fournir des communications IM.

12. Procédé de communications comprenant :
l'utilisation d'un dispositif de contrôle (20) pour communiquer avec un dispositif contrôlable (60) par l'intermédiaire d'une passerelle de contrôle (40) sur un réseau (61), la passerelle de contrôle ayant un contact de passerelle IM (41) qui y est associé et comprenant une base de données (42) d'une pluralité de contacts de dispositif IM déjà validés ;
la communication étant basée sur un contact de dispositif IM (32) associé au dispositif de contrôle et le contact de passerelle IM et après la validation de la passerelle de contrôle ;
la communication étant également basée sur la passerelle de contrôle envoyant une demande de communications au dispositif de contrôle sur la base du contact de dispositif IM qui est ajouté à la base de données de la pluralité de contacts de dispositif IM déjà validés.

13. Procédé selon la revendication 12, comprenant en outre l'utilisation du dispositif de contrôle pour envoyer une demande de validation à la passerelle de contrôle.
